# EUROPEAN PATENT APPLICATION

(11) **EP 4 617 669 A1**
(43) Date of publication of application: **17.09.2025**
(21) Application number: 23888524.8
(22) Date of filing: 26.10.2023
(51) Int. Cl.: G01N 35/00

(54) **AUTOMATED ANALYSIS DEVICE AND AUTOMATED ANALYSIS SYSTEM**

(30) Priority: 07.11.2022 JP 2022177755
(71) Applicant: HITACHI HIGH-TECH CORPORATION, Tokyo 105-6409 (JP)
(72) Inventor: ASADA Sayaka, Tokyo 105-6409 (JP); IGUCHI Akihiro, Tokyo 105-6409 (JP)
(74) Representative: MERH-IP Matias Erny Reichl Hoffmann Patentanwälte PartG mbB
(86) International application number: PCT/JP2023/038789
(87) International publication number: WO 2024/101176

(57) **Abstract**

An object of the invention is to provide an automatic analyzer that reduces an error specimen caused by a preprocessing step and reduces a workload of an operator. For this purpose, the invention provides an automatic analyzer for analyzing a specimen, the automatic analyzer including: a preprocessing registration information acquisition unit configured to read or receive, for each specimen, preprocessing registration information for specifying a preprocessing execution source that performs preprocessing on the specimen or a preprocessing date and time at which preprocessing is performed on the specimen; an error determination unit configured to determine, for each specimen, presence or absence of occurrence of an error caused by the preprocessing; and a statistical data output unit configured to statistically output an error occurrence status for each preprocessing execution source or preprocessing date and time.

## Description

### Technical Field

The present invention relates to an automatic analyzer and an automatic analysis system.

### Background Art

An automatic analyzer reacts a specimen (sample) such as blood or urine with a reagent, and optically and electrically detects a reaction occurring between the specimen and the reagent. In such an automatic analyzer, when an amount of serum in the specimen is small or when there is hemolysis or the like in the serum, an error may occur during analysis, and thus it is desirable to take measures such as removing such a specimen before analysis. For example, PTL 1 discloses an analyzer that analyzes an image captured by an imaging unit to determine, for example, a serum volume and presence or absence of centrifugation or hemolysis as a status inside a specimen vessel before being loaded into the analyzer.

### Citation List

### Patent Literature

PTL 1: JP2012-159318A

### Summary of Invention

### Technical Problem

If the technique disclosed in PTL 1 or the like is used, it is possible to mechanically specify an abnormal specimen in a preprocessing stage without relying on visual determination by an operator, but a fundamental problem is not solved, that is, occurrence of an error due to a manual procedure in the preprocessing step is not prevented.

An object of the invention is to provide an automatic analyzer and an automatic analysis system that reduce an error specimen caused by a preprocessing step and reduce a workload of an operator.

### Solution to Problem

In order to solve the above-described problems, an automatic analyzer according to the invention includes: a preprocessing registration information acquisition unit configured to read or receive, for each specimen, preprocessing registration information for specifying a preprocessing execution source that performs preprocessing on the specimen or a preprocessing date and time at which preprocessing is performed on the specimen; an error determination unit configured to determine, for each specimen, presence or absence of occurrence of an error caused by the preprocessing; and a statistical data output unit configured to statistically output an error occurrence status for each preprocessing execution source or preprocessing date and time.

Alternatively, an automatic analysis system according to the invention includes: a plurality of automatic analyzers configured to analyze a specimen; and an analysis computer connected to the plurality of automatic analyzers via a communication line, in which the plurality of automatic analyzers transmit, to the analysis computer, an analysis result associated with a specimen ID attached to a specimen vessel containing the specimen, and the analysis computer statistically outputs an error occurrence status for each preprocessing execution source that performs preprocessing on the specimen or each preprocessing date and time at which preprocessing is performed on the specimen.

### Advantageous Effects of Invention

According to the invention, it is possible to provide an automatic analyzer and an automatic analysis system that reduce an error specimen caused by a preprocessing step and reduce a workload of an operator.

### Brief Description of Drawings

[FIG. 1] FIG. 1 is an overall configuration diagram of an automatic analysis system according to a first embodiment.
[FIG. 2] FIG. 2 is a perspective view showing a configuration of an analysis unit.
[FIG. 3] FIG. 3 is a block diagram showing a configuration of a control computer of an automatic analyzer according to the first embodiment.
[FIG. 4] FIG. 4 is an example of a specimen preprocessing related information table stored in a specimen preprocessing related information database.
[FIG. 5] FIG. 5 shows examples of a normal specimen and an error specimen when the specimens are blood.
[FIG. 6] FIG. 6 is an example of an aggregated result of error specimens.
[FIG. 7] FIG. 7 is an example of a graph showing error rate transition.
[FIG. 8] FIG. 8 is a block diagram showing an overall configuration of an automatic analysis system according to a second embodiment.

### Description of Embodiments

Hereinafter, embodiments of the invention will be described with reference to the drawings.

### First Embodiment

### <Automatic Analysis System>

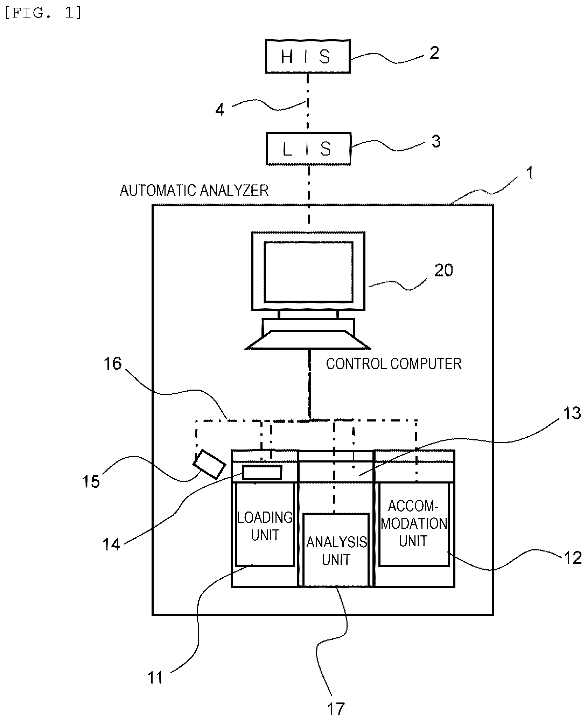

FIG. 1 is an overall configuration diagram of an automatic analysis system according to a first embodiment. As shown in FIG. 1, the automatic analysis system according to the first embodiment includes an automatic analyzer 1, a laboratory information system (LIS) 2, a hospital information system (HIS) 3, and a first communication line 4. Here, the LIS is a higher-level system of the automatic analyzer and controls the entire automatic analyzer. The HIS is a system used on a clinical side, and is a higher-level system of the LIS. The first communication line 4 is a wired or wireless line for performing mutual communication between the automatic analyzer and the LIS and between the LIS and the HIS.

The automatic analyzer 1 includes a loading unit 11, an accommodation unit 12, a transport line 13, an identifier reading unit 14, a camera 15, a second communication line 16, an analysis unit 17, and a control computer 20. The loading unit 11 is a portion for loading, into the automatic analyzer 1, a specimen rack where a specimen vessel containing a specimen is mounted. The accommodation unit 12 is a portion for collecting and accommodating the specimen rack. The transport line 13 transports the specimen rack from the loading unit 11 to the analysis unit 17 and transports the specimen rack from the analysis unit 17 to the accommodation unit 12. The identifier reading unit 14 reads a rack identifier attached to the specimen rack loaded from the loading unit 11 or a specimen identifier attached to the specimen vessel mounted at the rack. The identifier reading unit 14 is, for example, a barcode reader when the identifier is a barcode, and is an RFID reader when the identifier is an RFID tag. Since it is necessary to read the identifier before analysis, it is desirable that the identifier reading unit 14 is provided upstream of the transport line 13 in the vicinity thereof or in the vicinity of the loading unit 11. The camera 15 captures an image of the inside of the specimen vessel loaded into the loading unit 11, and is provided, for example, upstream of the transport line 13 in the vicinity thereof or in the vicinity of the loading unit 11, similarly to the identifier reading unit 14. The camera 15 may also function as the identifier reading unit 14. The second communication line 16 is a wired or wireless line for performing mutual communication between units (mechanisms) in the automatic analyzer 1. Information read by the identifier reading unit 14 and the image captured by the camera 15 are transmitted to the control computer 20 via the second communication line 16 and stored in a storage or the like in the control computer 20.

### <Analysis Unit>

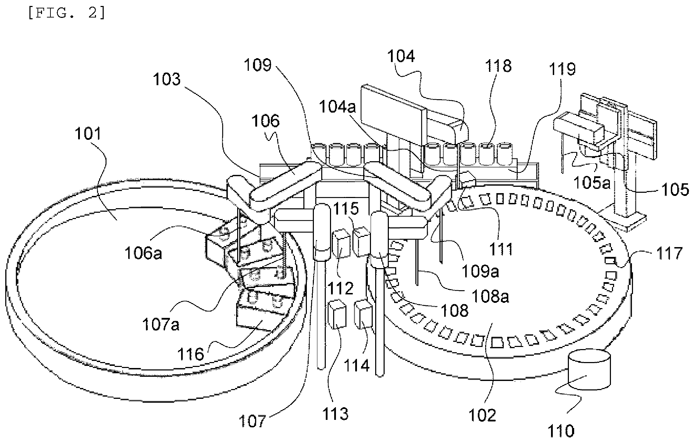

The analysis unit obtains a concentration of a biological component contained in the specimen by reacting the specimen with a reagent in a reaction vessel and measuring a reacted reaction solution thereof. FIG. 2 is a perspective view showing a configuration of the analysis unit. As shown in FIG. 2, the analysis unit includes, as main components, a reagent disk 101, a reaction disk 102, a specimen transport mechanism 103, specimen dispensing mechanisms 104 and 105, reagent dispensing mechanisms 106 to 109, a spectrophotometer 110, a stirring mechanism 111, and cleaning tanks 112 to 115. Each mechanism is connected to the control computer 20 to be described later via the second communication line 16, and an operation thereof is controlled by the control computer 20.

The reagent disk 101 is disposed inside a reagent refrigeration unit (not shown), and a plurality of reagent vessels 116 containing the reagent can be circumferentially placed at an upper surface thereof.

On the reaction disk 102, a plurality of reaction vessels 117 for storing a mixed solution in which the specimen and the reagent are mixed are circumferentially disposed. The specimen transport mechanism 103 for transporting a specimen rack 119 where a specimen vessel 118 is mounted is disposed in the vicinity of the reaction disk 102.

The specimen dispensing mechanisms 104 and 105 that can rotate and move up and down are disposed between the reaction disk 102 and the specimen transport mechanism 103, and include specimen dispensing probes 104a and 105a, respectively. Although not shown, each of the specimen dispensing probes 104a and 105a is connected to a specimen syringe via a dispensing flow path. The specimen syringe aspirates the specimen from the specimen vessel 118 and discharges the aspirated specimen to the reaction vessel 117 via the specimen dispensing probes 104a and 105a. A pressure sensor (not shown) for detecting pressure in the dispensing flow path is also provided in the middle of the dispensing flow path.

The reagent dispensing mechanisms 106 to 109 that can rotate and move up and down are provided between the reaction disk 102 and the reagent disk 101, and include reagent dispensing probes 106a to 109a, respectively. The reagent dispensing probes 106a to 109a are vertically and horizontally moved by the reagent dispensing mechanisms 106 to 109. A reagent syringe (not shown) is connected to each of the reagent dispensing probes 106a to 109a. The reagent syringe dispenses, into the reaction vessel 117, the reagent, a detergent, a diluent, a preprocessing reagent, and the like aspirated from the reagent vessel 116 via the reagent dispensing probes 106a to 109a.

Around the reaction disk 102, the spectrophotometer 110 for measuring absorbance of light passing through the mixed solution in the reaction vessel 117, the stirring mechanism 111 for mixing the specimen and the reagent dispensed into the reaction vessel 117, a cleaning mechanism (not shown) for cleaning the inside of the reaction vessel 117, and the like are disposed. The cleaning tanks 112 to 115 for the reagent dispensing probes 106a to 109a are disposed in operation ranges of the reagent dispensing mechanisms 106 to 109, respectively.

Next, an overview of a flow of analysis by the analysis unit will be described. First, the specimen in the specimen vessel 118 placed on the specimen rack 119 transported to the vicinity of the reaction disk 102 by the specimen transport mechanism 103 is dispensed into the reaction vessel 117 on the reaction disk 102 by the specimen dispensing probes 104a and 105a of the specimen dispensing mechanism 104 and 105. Next, the reagent dispensing mechanisms 106 to 109 dispense, by the reagent dispensing probes 106a to 109a, the reagent to be used for the analysis from the reagent vessel 116 on the reagent disk 101 to the reaction vessel 117 into which the specimen has been previously dispensed. Subsequently, the stirring mechanism 111 stirs the mixed solution of the specimen and the reagent in the reaction vessel 117.

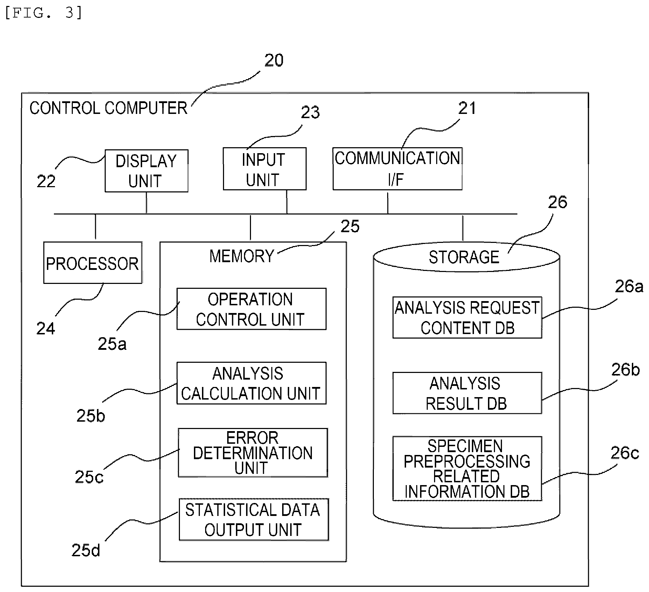

Thereafter, light generated from a light source is transmitted through the reaction vessel 117 containing the mixed solution, and intensity of the transmitted light is measured by the spectrophotometer 110. The intensity measured by the spectrophotometer 110 is transmitted to the control computer 20 via an A/D converter and the second communication line 16. Then, the control computer 20 performs calculation to obtain a concentration of a predetermined component in the specimen and displays a result on a display unit (see FIG. 3) or the like. In the description, the automatic analyzer that obtains the concentration of the predetermined component using the spectrophotometer 110 will be described as an example, and the technique disclosed in the description may also be used for an immunoassay automatic analyzer or a coagulation automatic analyzer that measures a specimen using another photometer.

### <Control Computer>

FIG. 3 is a block diagram showing a configuration of the control computer of the automatic analyzer according to the first embodiment. As shown in FIG. 3, the control computer 20 includes a communication interface 21, a display unit 22, an input unit 23, a processor 24, a memory 25, and a storage 26.

The communication interface 21 receives analysis request contents (measurement items and the like) from the LIS via the first communication line 4, and transmits a test result to the LIS via the first communication line 4. The display unit 22 outputs information such as the analysis request contents and an analysis result, and is, for example, a display. The input unit 23 is used for selecting a predetermined portion on a screen displayed on the display unit 22 and inputting predetermined information, and is, for example, a keyboard or a mouse. The processor 24 executes each function by reading each program stored in the memory 25, and stores, in the storage 26, information received via the communication interface 21.

The memory 25 stores a program corresponding to each function executed by the processor 24 as an operation control unit 25a, an analysis calculation unit 25b, an error determination unit 25c, and a statistical data output unit 25d. The operation control unit 25a controls an operation of each unit such as the loading unit 11, the analysis unit 17, the accommodation unit 12, and the transport line 13. The analysis calculation unit 25b calculates the concentration of the biological component contained in the specimen. The error determination unit 25c determines, for each specimen, presence or absence of an error caused by preprocessing. Here, the preprocessing is processing performed before the automatic analyzer executes analysis, and includes, for example, when the specimen is blood, processing performed by a nurse or a clinical laboratory technician, such as blood collection, inversion mixing of a blood collection tube (specimen vessel), and centrifugation. The statistical data output unit 25d statistically outputs an error occurrence status for each preprocessing execution source (for example, a medical department) that executes the preprocessing or for each execution date and time of the preprocessing.

The program may be provided by being pre-embedded in a ROM or the like, recorded on a computer-readable recording medium in an installable or executable file format, or distributed in such forms. Further, the program may be stored on a computer connected to a network such as the Internet and provided or distributed by being downloaded via the network.

The storage 26 includes an analysis request content database 26a, an analysis result database 26b, a specimen preprocessing related information database 26c, and the like. The analysis request content database 26a stores analysis requester information, a measurement item, a specimen reception date and time, a subject (patient) name or an ID thereof, blood collection tube information (blood collection tube manufacturer, lot number, expiration date), and the like registered for each specimen ID. Here, the analysis requester information is, for example, information such as a medical department name that requests the analysis or an ID thereof, outpatient or inpatient (hospitalization), a blood collector, and a blood collection date and time. The analysis result database 26b stores not only a measurement result for the measurement item in the analysis request contents but also presence or absence of clogging in the specimen dispensing probe to be described later.

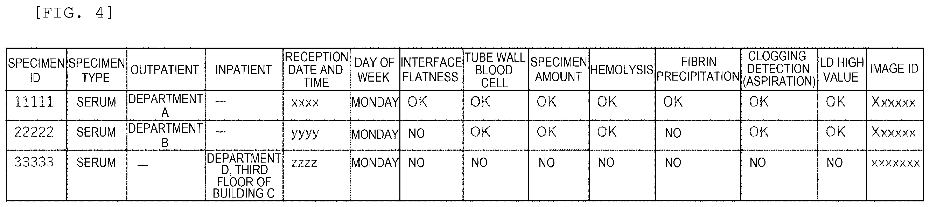

FIG. 4 is an example of a specimen preprocessing related information table stored in the specimen preprocessing related information database. As shown in FIG. 4, in the specimen preprocessing related information table, presence or absence of an error caused by the preprocessing is stored in association with the specimen ID in addition to preprocessing registration information for specifying the preprocessing execution source and the preprocessing date and time. Here, the preprocessing registration information is extracted from the analysis request content database 26a. For example, the preprocessing execution source may be the clinical department that is an analysis requester, or may be a blood collector who actually performs blood collection as the preprocessing. The preprocessing date and time may be a specimen reception date and time when the analysis request is received, or may be a blood collection date and time. Examples of the error caused by the preprocessing include abnormalities of specimen interface flatness, a status of blood clot adhesion to the wall surface of the blood collection tube, a fibrin precipitation status in the blood collection tube, a specimen hemolysis status, and an amount of the specimen. Although not shown in FIG. 4, the specimen preprocessing related information table may include blood collection tube information and a blood collection tube internal image.

### <Error Determination>

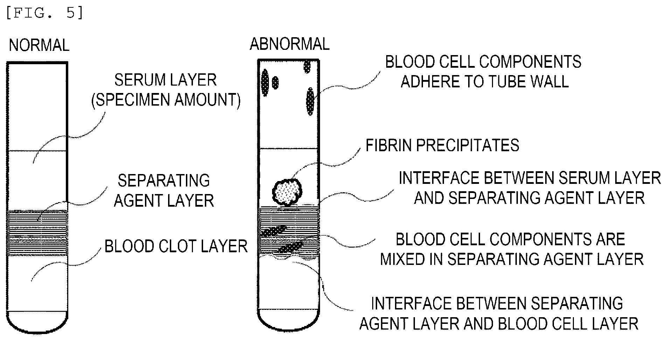

Next, a method in which the error determination unit 25c determines the presence or absence of the error caused by the preprocessing will be described. FIG. 5 shows examples of a normal specimen and an error specimen when specimens are serum. In the case of the normal specimen, when blood is centrifuged, the blood is clearly divided into three layers of a serum layer, a separating agent layer, and a blood clot layer from the top. Meanwhile, in the case of the error specimen where the preprocessing is not appropriately performed, a blood cell component may adhere to a tube wall, fibrin may precipitate, a blood cell component may be mixed into the separating agent layer, or an interface between the layers may not be flat. Examples of inappropriate preprocessing include insufficient inversion mixing of the blood collection tube, an insufficient specimen (blood) amount, an insufficient standing time, and insufficient centrifugation (centrifugation condition error). The insufficient inversion mixing prevents an agent such as a clot activator coated inside the blood collection tube from being evenly dispersed, and thus prevents even coagulation, which may lead to blood clot adhesion to the tube wall and fibrin precipitation inside the blood collection tube, and the insufficient standing time or centrifugation leads to, for example, a decrease in the specimen interface flatness, and the insufficient blood amount may lead to, for example, occurrence of hemolysis due to negative pressure in the blood collection tube. Similarly, when the specimen is plasma, an anticoagulant in the blood collection tube needs to be uniformly dispersed and centrifuged. After centrifugation, the specimen is divided into a plasma layer and a blood cell layer (a layer of platelets + white blood cells and a layer of red blood cells) from the top.

Here, as a method for determining the error specimen, two examples, that is, a first determination method performed using the camera 15 before analysis and a second determination method performed at the time of analysis will be described.

### <<First Determination Method>>

The first determination method is a method of determining presence or absence of an error before specimen analysis based on an image captured by the camera 15**.** When an error specimen is extracted by this method, an operator such as a clinical laboratory technician can remove the target specimen, remove fibrin or the like in the specimen, or perform centrifugation again, and thus analysis efficiency is improved. Hereinafter, details will be described.

First, the camera 15 acquires RGB data within a field of view including the specimen vessel. Next, the error determination unit 25c specifies an interface based on a change in a signal amount of each color of RGB, a change in a ratio of the signal amount of each color of RGB, and the like. When flatness of an interface between the serum layer and the separating agent layer or an interface between the separating agent layer and the blood clot layer does not satisfy a predetermined condition, the error determination unit 25c determines that there is an error (NO) since there is a variation in the interface and there is a possibility of insufficient standing time or centrifugation (see FIG. 4). When a position of an upper end of the serum layer is lower than a predetermined height, the error determination unit 25c determines that there is an error (NO) since the specimen amount is insufficient (see FIG. 4). Further, when a foreign substance such as a blood cell component on the tube wall or fibrin is specified based on the signal amount of each color of RGB, the error determination unit 25c also determines that there is an error (NO) since there is a possibility of insufficient inversion mixing (see FIG. 4). When a signal amount of R exceeds a predetermined threshold, the error determination unit 25c determines that there is an error (NO) since there is a possibility of hemolysis (see FIG. 4).

The error determination unit 25c may perform processing based on a signal amount in another color space such as L*a*b* in addition to processing based on the signal amount in an RGB color space. The error determination unit 25c may also output the presence or absence of the error by inputting image data captured with the camera 15 to a learning model created in advance. Further, image IDs are also stored in the specimen preprocessing related information table shown in FIG. 4, and when a predetermined image ID is selected, it is also possible to actually check a captured image that is a basis of error determination.

### <<Second Determination Method>>

The second determination method is a method of determining whether the specimen is an error specimen based on a result of analysis performed on the specimen transported to the analysis unit. In this method, the error specimen can be extracted without the camera 15 or the like for capturing the image of the inside of the specimen vessel. Hereinafter, details will be described.

The error determination unit 25c determines presence or absence of clogging in the specimen dispensing probe based on a detection result of the pressure sensor when the specimen dispensing probe aspirates the specimen from the specimen vessel (see FIG. 4). However, since a cause of clogging may be long-term use of the specimen dispensing probe or the like, the error determination unit 25c may determine that there is an error (NO) at a stage where clogging due to the preprocessing can be confirmed.

The error determination unit 25c also determines whether lactate dehydrogenase (LD) in an analysis result is higher than a predetermined threshold (see FIG. 4). However, since a factor that causes the LD to have a high value may be an abnormality in hepatocytes, the error determination unit 25c may determine that there is an error (NO) at a stage where a false high value caused by the preprocessing can be confirmed. Whether there is a false high value is comprehensively determined based on a result of retesting by re-centrifuging the specimen or collecting the specimen again from a subject of the specimen to ascertain whether there is an abnormality in the LD, and by comparing with a previous value of the patient. Factors that cause the LD to have a false high value include an inappropriate centrifugation condition, an insufficient standing time, insufficient inversion mixing, and the like.

When hemolysis occurs, aspartate aminotransferase (AST) and the like in addition to the LD may also have a false high value. When the analysis result includes a hemolysis rate, presence or absence of an error may be determined based on the hemolysis rate. Further, even when HBs antigen in the analysis result is false positive, the error determination unit 25c can determine that there is an error (NO) since there is a possibility of inappropriate preprocessing on the specimen.

### <Statistical Processing>

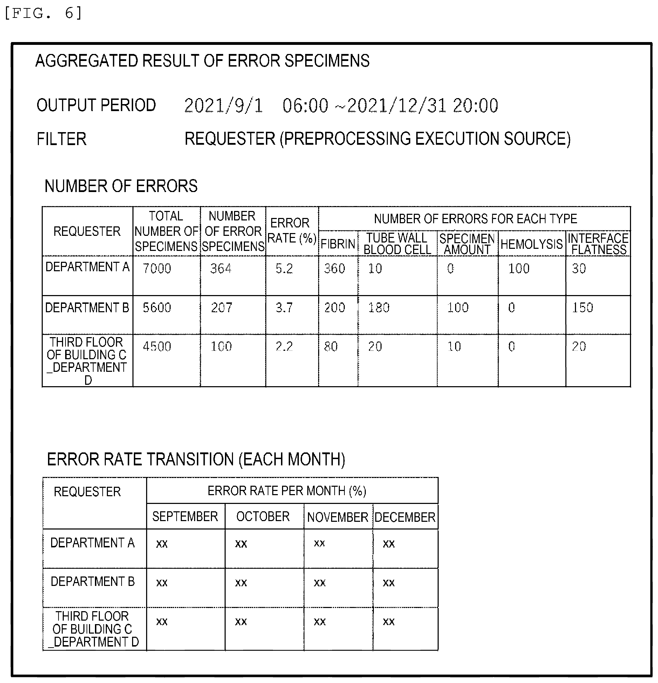

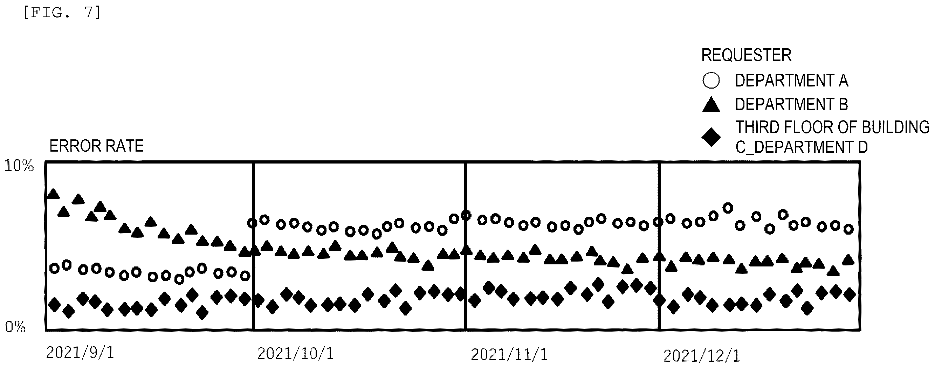

Next, statistical processing of the statistical data output unit 25d will be described with reference to FIGS. 6 and **7****.**

FIG. 6 is an example of an aggregated result of error specimens.

First, an operator who is a user inputs, using the display unit 22 and the input unit 23, conditions such as a period of data to be output and an analysis requester to be output. In the example in FIG. 6, a period from 6:00 on September 1, 2021, to 20:00 on December 31, 2021, is specified, and a department A, a department B, and a department D on a third floor of a building C are specified as analysis requesters. It is assumed that a date and time of data is counted based on the preprocessing date and time, and may also be counted based on another date and time such as the specimen reception date and time. In the example in FIG. 6, the number of errors and an error rate are output for each specified analysis requester, but an output mode is not limited thereto. For example, when an error type is specified, the number of errors or the error rate may be output for each error type.

The statistical data output unit 25d refers to the specimen preprocessing related information database 26c, extracts information on the specimen corresponding to the specified conditions, and aggregates the number of errors for each analysis requester. In the example in FIG. 6, an error determined by the above-described first determination method (image analysis) is shown as the error type, and alternatively, an error determined by the above-described second determination method may be shown. In addition, in the example of FIG. 6, it can be seen that the number of errors of the interface flatness in the specified period of the department B is as large as 150, and the standing time of the blood collection tube or the centrifugation may be insufficient in the preprocessing step.

Here, when one specimen has a plurality of types of errors, the number of error specimens is counted as one. The error rate is obtained by dividing the number of error specimens for each analysis requester by the total number of specimens for each analysis requester, and is displayed in terms of %**.** When the specified period is a plurality of months, the statistical data output unit 25d outputs the error rate as transition for each month, and thus it is easy to associate the error rate with a change that may be a factor of an error such as a personnel shift in the analysis requester. Instead of the error rate, another indicator showing error occurrence frequency, such as the number of error specimens per month, may be used.

FIG. 7 is an example of a graph showing the error rate transition. In the example in FIG. 7, since the error rate in the department A rapidly increases from September to October, 2021, it is possible to estimate that there is a problem with a manual procedure performed by a blood collector or the like if there is a blood collector or the like who newly performs the preprocessing at this time. When only the error rate of a specific day in a week tends to be high, it is possible to estimate that there is a problem with the manual procedure performed by the blood collector or the like in charge of the day in the week. If objective statistical data output in this way is provided to the analysis requester and the manual procedure of the blood collector or the like is improved, it is possible to reduce the number of error specimens caused by the preprocessing step, that is, to reduce a workload of the operator. Further, a retesting rate may be reduced and a time required to report a test result may be reduced, which is increasingly demanded by a large number of laboratories in recent years.

When the error rate increases to a certain level or higher, a notification may be issued at any timing (such as when the apparatus is started up at the end of a month). However, a threshold of whether to issue the notification may be different for each analysis requester. This is because the error specimen may be caused by a drug administered to a patient in addition to those caused by the preprocessing step, and there are analysis requesters (medical departments) that are likely to originally have a high error rate. Regardless of the analysis requester, when the error occurrence frequency increases due to clogging in the specimen dispensing probe, there is a possibility of clogging due to long-term use of the specimen dispensing probe instead of clogging caused by the preprocessing step, and thus a notification for prompting maintenance of the specimen dispensing probe may be issued.

In the first embodiment, it is assumed that the automatic analyzer receives the analysis request contents from the LIS through the first communication line 4, and alternatively, at least a part of the analysis request contents may be read from the identifier by the automatic analyzer. In particular, when the identifier attached to the specimen vessel or the like is an RFID tag or the like and can be associated with a large amount of information, not only the specimen ID but also the preprocessing registration information for specifying the preprocessing execution source and the preprocessing date and time can be read by an RFID reader or the like. That is, the preprocessing registration information acquisition unit is not limited to the communication interface 21, and may be the identifier reading unit 14**.**

Further, the statistical data output unit 25d may output the error rate transition for each analysis requester, extract the blood collection tube information from the specimen preprocessing related information database 26c, and output a time when the manufacturer, the lot number, or the like of the blood collection tube is changed for each analysis requester. This is because the error specimen may be caused not only by the preprocessing step but also by a change (in manufacturer, type, or lot) in the blood collection tube.

### Second Embodiment

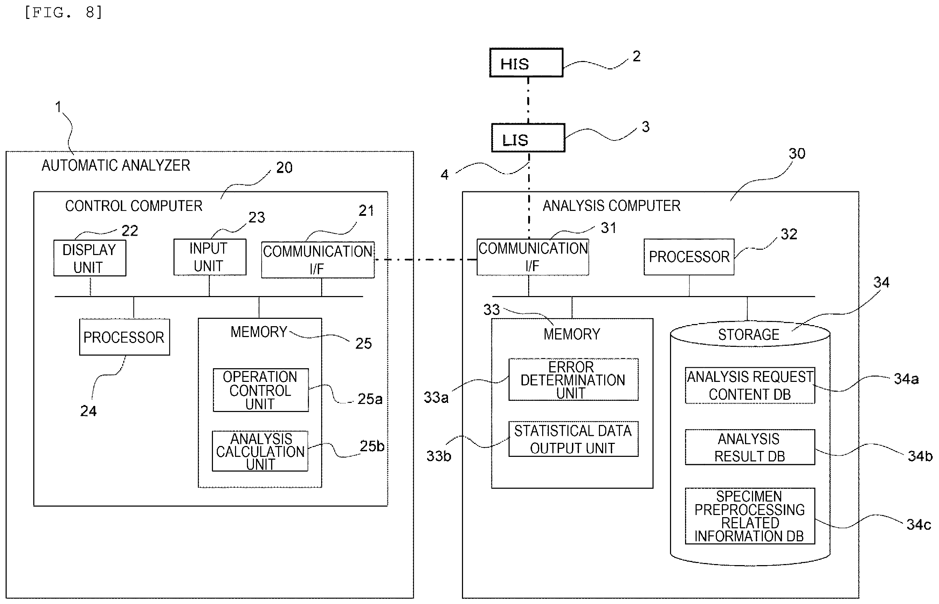

FIG. 8 is a block diagram showing an overall configuration of an automatic analysis system according to a second embodiment. As shown in FIG. 8, the automatic analysis system in the second embodiment includes an analysis computer 30 in addition to the automatic analyzer 1, the LIS, the HIS, and the first communication line 4**.** Here, the analysis computer 30 is connected to a plurality of automatic analyzers 1 via the first communication line 4, and is also connected to the LIS via the first communication line 4. In the automatic analyzer 1 in FIG. 8, a configuration other than the control computer 20 is not shown and is the same as that in the first embodiment.

First, a configuration of the control computer 20 in the automatic analyzer in the second embodiment will be described. The control computer 20 in the second embodiment includes the communication interface 21, the display unit 22, the input unit 23, the processor 24, and the memory 25. That is, unlike the first embodiment, the control computer 20 in the second embodiment does not include the storage for storing the specimen preprocessing related information database and the like. Unlike the first embodiment, the memory 25 in the control computer 20 in the second embodiment does not store the error determination unit and the statistical data output unit.

Next, a configuration of the analysis computer 30 in the second embodiment will be described. The analysis computer 30 includes a communication interface 31, a processor 32, a memory 33, and a storage 34. The communication interface 31 in the analysis computer 30 receives the analysis request contents from the LIS via the first communication line 4, and transmits the received analysis request contents to the control computer 20 of the automatic analyzer via the first communication line 4. The communication interface 31 of the analysis computer 30 receives an analysis result from the control computer 20 of the automatic analyzer through the first communication line 4 and transmits the received analysis result to the LIS. The processor 32 of the analysis computer 30 executes each function by reading each program stored in the memory 33, and stores information received via the communication interface 31 in the storage 34.

The memory 33 of the analysis computer 30 stores the program corresponding to each function executed by the processor 32 as an error determination unit 33a and a statistical data output unit 33b. The storage 34 of the analysis computer 30 includes an analysis request content database 34a, an analysis result database 34b, a specimen preprocessing related information database 34c, and the like.

That is, in the second embodiment, the analysis computer 30 determines whether a specimen requested to be analyzed by each automatic analyzer is an error specimen, and performs statistical processing of an error occurrence status.

Here, a method for determining the error specimen in the second embodiment will be described. In a first determination method, each automatic analyzer transmits an image of the inside of the specimen vessel captured by the camera 15 before analysis to the analysis computer 30, and the error determination unit 33a of the analysis computer 30 determines presence or absence of an error caused by preprocessing for each specimen based on the received image. The determination method by the error determination unit 33a in this case is the same as the first determination method in the first embodiment. In a second determination method, each automatic analyzer transmits an analysis result including a clogging status of the specimen dispensing probe to the analysis computer 30, and the error determination unit 33a of the analysis computer 30 determines the presence or absence of the error caused by the preprocessing for each specimen based on the received analysis result. The determination method by the error determination unit 33a in this case is the same as the second determination method in the first embodiment.

Next, a processing method of error statistics in the second embodiment will be described. The statistical data output unit 33b in the analysis computer 30 refers to the specimen preprocessing related information database 34c stored in the storage 34, extracts information on a specimen corresponding to specified conditions, and aggregates the number of errors for each analysis requester. The processing method by the statistical data output unit 33b is the same as that in the first embodiment.

In the second embodiment, both the error determination and the statistical processing are performed by the analysis computer 30, and alternatively, a part or all of the error determination may be performed by the control computer 20 of the automatic analyzer. In this case, a result of the error determination performed by the control computer 20 of the automatic analyzer is transmitted to the analysis computer 30 and used for the statistical processing by the statistical data output unit 33b of the analysis computer 30.

The invention is not limited to the embodiments described above, and includes various modifications. For example, in each of the above-described embodiments, the control computer or the analysis computer performs the error determination, and alternatively, the operator may perform the error determination and the control computer or the analysis computer may perform the statistical processing based on a determination result received from the operator. A function of the analysis computer described in the second embodiment may be performed by a computer of the LIS. Further, a part of a configuration of a certain embodiment can also be replaced with a configuration of another embodiment, and a configuration of another embodiment can also be added to a configuration of a certain embodiment. It is possible to add, delete, or replace a part of configurations of each embodiment with other configurations.

### Reference Signs List

1... automatic analyzer
2... LIS
3... HIS
4... first communication line
11... loading unit
12... accommodation unit
13... transport line
14... identifier reading unit
15... camera
16... second communication line
17... analysis unit
20... control computer
21... communication interface (control computer)
22... display unit
23... input unit
24... processor (control computer)
25... memory (control computer)
25a... operation control unit
25b... analysis calculation unit
25c... error determination unit
25d... statistical data output unit
26... storage
26a... analysis request content database
26b... analysis result database
26c... specimen preprocessing related information database
30... analysis computer
31... communication interface (analysis computer)
32... processor (analysis computer)
33... memory (analysis computer)
33a... error determination unit
33b... statistical data output unit
34... storage (analysis computer)
34a... analysis request content database
34b... analysis result database
34c... specimen preprocessing related information database
101... reagent disk
102... reaction disk
103... specimen transport mechanism
104, 105... specimen dispensing mechanism
104a, 105a... specimen dispensing probe
106 to 109... reagent dispensing mechanism
106a to 109a... reagent dispensing probe
110... spectrophotometer
111... stirring mechanism
112 to 115... cleaning tank
116... reagent vessel
117... reaction vessel
118... specimen vessel
119... specimen rack

## Claims

1. An automatic analyzer for analyzing a specimen, the automatic analyzer comprising:
a preprocessing registration information acquisition unit configured to read or receive, for each specimen, preprocessing registration information for specifying a preprocessing execution source that performs preprocessing on the specimen or a preprocessing date and time at which preprocessing is performed on the specimen;
an error determination unit configured to determine, for each specimen, presence or absence of occurrence of an error caused by the preprocessing; and
a statistical data output unit configured to statistically output an error occurrence status for each preprocessing execution source or preprocessing date and time.

2. The automatic analyzer according to claim 1, further comprising:
a loading unit into which a specimen vessel containing the specimen is loaded; and
a camera configured to capture an image of inside of the specimen vessel loaded into the loading unit, wherein
the error determination unit determines, based on the image captured by the camera, presence or absence of an error before the specimen is analyzed.

3. The automatic analyzer according to claim 2, wherein
the error determination unit specifies, based on the image, at least one of an interface flatness of the specimen, a status of blood clot adhesion to a wall surface of the specimen vessel, a status of fibrin precipitation in the specimen vessel, a hemolysis status of the specimen, and an amount of the specimen, and determines the presence or absence of an error.

4. The automatic analyzer according to claim 1, further comprising:
a specimen dispensing probe configured to dispense the specimen; and
a clogging detection unit configured to detect clogging in the specimen dispensing probe, wherein
the error determination unit determines presence or absence of an error based on a clogging status detected by the clogging detection unit.

5. The automatic analyzer according to claim 4, wherein
a notification prompting maintenance is issued when error occurrence frequency increases due to the clogging in the specimen dispensing probe regardless of the preprocessing execution source.

6. The automatic analyzer according to claim 1, wherein
a notification is issued when error occurrence frequency of a predetermined preprocessing execution source increases to a certain level or higher.

7. The automatic analyzer according to claim 1, wherein
the error determination unit determines that an error has occurred when an analysis result of a predetermined item is a false high value or false positive.

8. The automatic analyzer according to claim 1, further comprising:
a reading unit configured to read a specimen ID attached to a specimen vessel containing the specimen, wherein
the preprocessing registration information acquisition unit is a communication interface that receives the preprocessing registration information associated with the specimen ID via a communication line.

9. The automatic analyzer according to claim 1**,** wherein the preprocessing registration information is attached to a specimen vessel containing the specimen as an identifier together with a specimen ID, and
the preprocessing registration information acquisition unit reads the identifier.

10. An automatic analysis system comprising:
a plurality of automatic analyzers configured to analyze a specimen; and
an analysis computer connected to the plurality of automatic analyzers via a communication line, wherein
the plurality of automatic analyzers transmit, to the analysis computer, an analysis result associated with a specimen ID attached to a specimen vessel containing the specimen, and
the analysis computer statistically outputs an error occurrence status for each preprocessing execution source that performs preprocessing on the specimen or each preprocessing date and time at which preprocessing is performed on the specimen.

11. The automatic analysis system according to claim 10, wherein
the plurality of automatic analyzers determine, for each specimen, presence or absence of occurrence of an error caused by the preprocessing, and transmit a determined result to the analysis computer.

12. The automatic analysis system according to claim 10, wherein
the plurality of automatic analyzers transmit, to the analysis computer, an image of inside of the specimen vessel captured by a camera, and
based on the image, the analysis computer determines, for each specimen, presence or absence of an error caused by the preprocessing.
